**Europäisches Patentamt**

**European Patent Office**

**Office européen des brevets**

(11) Veröffentlichungsnummer: **0 038 906**

**A1**

## (12) EUROPÄISCHE PATENTANMELDUNG

(21) Anmeldenummer: **81100823.4**

(22) Anmeldetag: **05.02.81**

(51) Int. Cl.³: **F 16 K 15/14**

(30) Priorität: **25.04.80 DE 3016003**

(43) Veröffentlichungstag der Anmeldung:
**04.11.81 Patentblatt 81/44**

(84) Benannte Vertragsstaaten:
**AT BE CH DE FR GB IT LI NL SE**

(71) Anmelder: **SIKO GmbH Dr. Ing. G. Wandres**

**D-7801 Buchenbach(DE)**

(72) Erfinder: **Halouska, Milan**
**Wirthstrasse 8**
**D-7800 Freiburg(DE)**

(72) Erfinder: **Wandres, Claus, Dipl.-Ing.**
**Weihermattenweg 6**
**D-7801 Buchenbach-Unteribental(DE)**

(74) Vertreter: **Charrier, Rolf, Dipl.-Ing.**
**Postfach 260 Rehlingenstrasse 8**
**D-8900 Augsburg 31(DE)**

(54) **Ringförmiges Plattenventil.**

(57) Bei einem ringförmigen Plattenventil ist der Ventilkörper (9, 11) drehsymmetrisch ausgebildet und in eine gestufte Gehäusebohrung (14,16) in einem Ventilkopf (1) eingesetzt. Der Ventilkörper (9, 11) liegt hierbei gegen eine Stufe (15) dieser Gehäusebohrung (14, 16) an. Zwischen dem Gehäusebohrungsteil (16) größeren Durchmessers und dem Ventilkörper (9, 11) wird ein äußerer ringförmiger Durchlaßkanal (3) gebildet, gegen den eine ringförmige elastische Ventilplatte (4) anliegt. Gegen einen weiteren dazu konzentrischen Durchlaßkanal (7) liegt an der der einen Ventilplatte 4 gegenüberliegenden Seite des Ventilkörpers (9, 11) eine weitere ringförmige Ventilplatte (10) an, hinter der der Ventilkörper (9, 11) einen Ringraum (12) bildet.

*Fig 1*

Dipl.-Ing.
*Rolf Charrier*
Patentanwalt

Rehlingenstraße 8 · Postfach 260
D-8900 Augsburg 31
Telefon 08 21/3 60 15 + 3 60 16
Telex 53 3 275
Postscheckkonto: München Nr. 1547 89-801

8223/07/Ch/Ha                    Augsburg, den 3. Februar 1981


SIKO GmbH Dr. Ing. G. Wandres
7801 Buchenbach


Ringförmiges Plattenventil


Die Erfindung betrifft ein ringförmiges Plattenventil
mit einer elastischen ringförmigen Ventilplatte, welche
gegen einen äußeren Durchlaßkanal an einem Ventilkörper anliegt, und mit einer weiteren, dazu konzentrischen , im wesentlichen ringförmigen, vom
Ventilkörper mittig gehaltenen elastischen Ventilplatte, die gegen einen weiteren inneren Durchlaßkanal im Ventilkörper an der der einen Ventilplatte
gegenüberliegenden Seite anliegt.

Dem GM 79 02 442 sind zwei Plattenventilkonstruktionen
zu entnehmen, bestehend aus einem getrennten Einlaß-
und Auslaßventil.  Das Auslaßventil besteht aus einer
elastischen scheibenförmigen Ventilplatte, welche gegen
einen runden Durchlaßkanal gedrückt wird. Die Ventilplatte wird hierbei mittig durch einen Bolzen gegen den
Durchlaßkanal gehalten.

Getrennt hiervon ist ein Plattenventil als Einlaßventil
vorgesehen, welches aus einer ringförmigen elastischen
Ventilplatte besteht, die innen gehalten wird und welche
kranzförmig angeordnete Bohrungen am Halteteil abdeckt.

**0038906**

Nachteilig bei dieser Konstruktion ist die getrennte Ausbildung von Einlaß- und Auslaßventil.

Bei einem weiteren aus der GB-PS 15 31 122 bekannten Plattenventil der eingangs genannten Art ist der scheibenförmige Ventilkörper zwischen Kompressorgehäuse und Kompressorkopf eingeklemmt. Sie besteht aus einer oberen und unteren Platte, zwischen denen ringförmige Stützelemente und innen ein Trennkörper angeordnet sind. Die untere Platte weist im Bereich der Stützelemente bogenförmige äußere Durchlässe auf, während beide Platten und der Trennkörper dazu konzentrische innere Durchlaßkanäle aufweisen.

Nachteilig ist hierbei der komplizierte Aufbau des Ventilkörpers. Weiterhin beeinflussen die Stützelemente das Strömungsverhalten am Einlaß nachteilig, wodurch der Wirkungsgrad vermindert wird.

Es besteht die Aufgabe, das eingangs genannte ringförmige Plattenventil so auszubilden, daß es bei einfachem Aufbau zu einem optimalen Wirkungsgrad des Kompressors führt.

Ein guter Wirkungsgrad des Kompressors führt dazu, daß der Kompressor nicht aus dem Stand anläuft, außer der Kompressor ist druckseitig während des Anlaufs mit der Atmosphäre verbunden. Hieraus ergibt sich eine weitere Teilaufgabe, nämlich mit dem Plattenventil einen Anlauf des Kompressors zu bewerkstelligen, ohne ihn druckseitig entlüften zu müssen.

Gelöst wird diese Aufgabe mit den Merkmalen des
Anspruches 1. Vorteilhafte Ausgestaltungen und eine
Lösung der vorgenannten Teilaufgabe sind den Unteransprüchen entnehmbar.

Ausführungsbeispiele werden nachfolgend anhand der
Zeichnung näher erläutert. Es zeigen:

Fig. 1 einen Querschnitt durch eine erste Ausführungsform;

Fig. 2 einen entsprechenden Querschnitt durch eine zweite
Ausführungsform;

Fig. 3 einen Querschnitt durch eine dritte Ausführungsform;

Fig. 4 einen Querschnitt durch eine vierte Ausführungsform;

Fig. 5 eine Draufsicht auf den Ventilkörper nach Fig. 4 und

Fig. 6 eine Draufsicht auf die eine Ventilplatte nach
Fig. 4.

Im Kopf 1 ist eine Bohrung 14,16 vorgesehen, wobei
zwischen den Bohrungsteilen 14,16 eine Stufe 15 vorhanden ist. In die Bohrung 14,16 ist ein innerer Ventilkörperteil 9 eingesetzt, welcher mit dem Kopf 1 verschraubt ist. Zwischen dem inneren Ventilkörperteil und
dem Bohrungsteil 14 ist ein Ringraum 12 vorhanden, in
welchem eine Querbohrung 13 mündet, welche die Auslaßbohrung darstellt. Über den inneren Ventilkörperteil 9 aufgesetzt ist ein äußerer Ventilkörperteil
11, welcher sich im Bereich des Bohrungsteils 16

0038906

größeren Durchmessers befindet. Zwischen diesem äußeren
Ventilkörperteil 11 und dem Bohrungsteil 16 ist ein
ringförmiger Durchlaßkanal 3 vorgesehen, in welchem
eine Querbohrung mündet, bei welcher es sich um die
Einlaßbohrung handelt. Weiterhin ist zwischen dem inneren
Ventilkörperteil 9 und dem äußeren Ventilkörperteil 11 ein
weiterer ringförmiger Durchlaßkanal 7 vorhanden. Mit
dem inneren Ventilkörperteil 9 stirnseitig verschraubt
ist eine Scheibe 6, welche im Bereich des weiteren Durchlaßkanals 7 Bohrungen aufweist. Zwischen der Scheibe 6
und dem äußeren Ventilkörperteil 11 wird eine ringförmige
Ventilplatte 4 gehalten, die den Durchlaßkanal 3 abdeckt. Andererseits wird vom inneren Ventilkörperteil
9 eine weitere ringförmige Ventilplatte 10 gehalten,
die den weiteren Durchlaßkanal 7 abdeckt und somit den
Durchlaßkanal 7 vom Ringraum 12 trennt. Über die Scheibe
6 wird der äußere Ventilkörperteil 11 stirnseitig gegen
die Bohrungsstufe 15 gedrückt, wodurch eine Trennung
der Saugseite von der Druckseite bewirkt wird. Die
Scheibe 6 ist mit dem inneren Ventilkörperteil 9
über die Schraube 8 verbunden.

Wird im Betrieb im Raum 5 ein Unterdruck erzeugt, dann
hebt die Ventilplatte 4 vom ringförmigen Durchlaßkanal 3 ab, so daß das zu verdichtende Medium über die
Querbohrung 2 und den Durchlaßkanal 3 in den Raum 5 zu
strömen vermag. Wird dann das Medium im Raum 5 verdichtet, dann strömt dieses Medium vom weiteren Durchlaßkanal 7 in den Ringraum 12, von wo es dann über die
Querbohrung 13 abströmt. Der im Raum 5 erzeugte Überdruck bewirkt hierbei, daß die weitere ringförmige
Ventilplatte 10 vom weiteren Durchlaßkanal 7 abhebt.

0038906

Alle Teile sind konzentrisch zueinander angeordnet, wobei
die Ventilkörperteile 9,11 und die Scheibe 6 Drehteile
sind und wobei es sich bei den Ventilplatten 4,10
vorzugsweise um Stanzteile handelt.

Die Montage ist einfach vorzunehmen. Auf den inneren
Ventilkörperteil 9 wird zuerst die weitere Ventilplatte
10 aufgesetzt, sodann der äußere Ventilkörperteil 11 und
auf diesen dann die Ventilplatte 4, wonach dann die
Scheibe 6 mit dem inneren Ventilkörperteil 9 verschraubt
wird. Diese Baueinheit wird sodann in die stufenförmige Bohrung 14,16 eingesetzt und mit dem Kopf 1 verschraubt.

Neben der einfachen Gestaltung und der einfachen Montage
ist von Vorteil, daß der Durchlaßquerschnitt des
Einlaßventils größer ist als derjenige des Auslaßventils,
was insbesondere bei Verdichtern von entscheidender
Bedeutung ist.

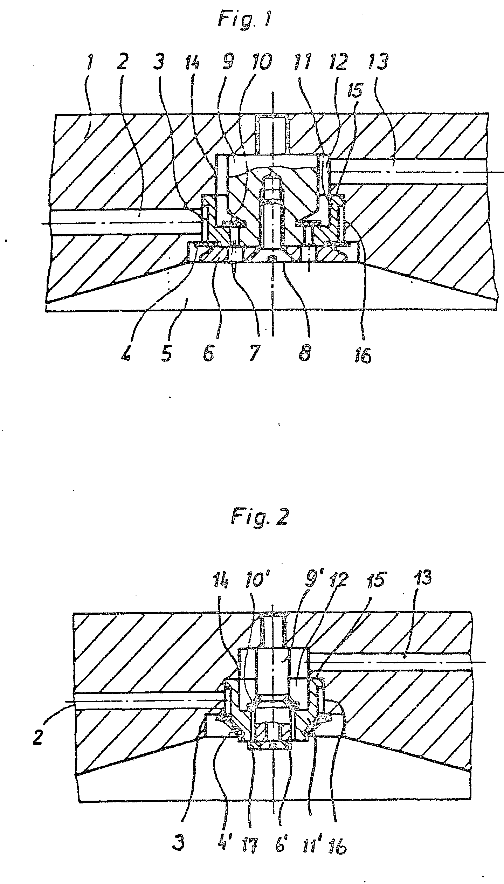

Die Ausführungsform nach Fig. 2 entspricht im Prinzip
derjenigen nach Fig. 1, jedoch mit dem Unterschied, daß
die Ventilplatten 4', 10' kegelstumpfartig auf die
Ventilkörperteile 9',11' aufgespannt sind, so daß sie
mit Vorspannung den jeweiligen Durchlaßkanal 3,7 abdecken. Zu diesem Zweck sind die Sitze für die Ventilplatten 4', 10' an den Ventilkörperteilen 9',11'
kegelstumpfartig ausgebildet. Ein weiterer Unterschied
besteht darin, daß die Scheibe 6' einen geringeren
Durchmesser aufweist als der Innendurchmesser des Durchlaßkanals 7, jedoch mindestens eine Nase 17 aufweist,
die diesen Durchlaßkanal 7 übergreift und stirnseitig
gegen den äußeren Ventilkörperteil 11 anliegt, der damit
gegen die Stufe 15 gehalten wird.

Die Vorspannung der Ventilplatten 4',10' ergeben auch
bei sehr langsamen Druckveränderungen im Raum 5 eine
einwandfreie Abdichtung, was wichtig ist bei sehr
langsam laufenden Verdichtern mit kleinen Liefermengen.

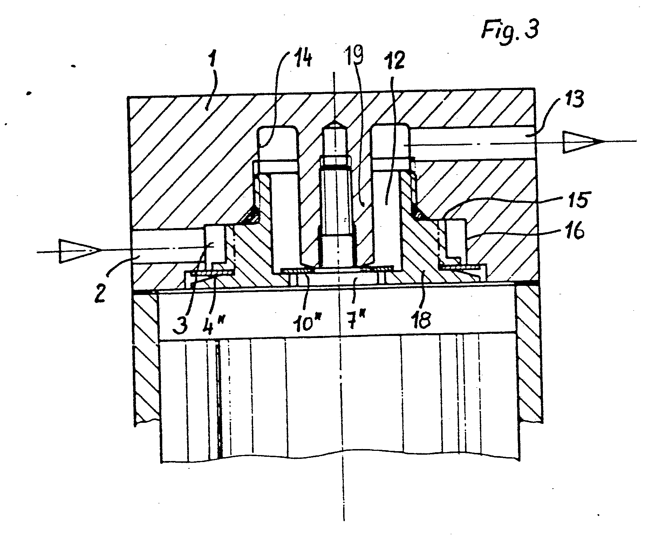

Bei der Ausführungsform nach Fig. 3 ist der Ventilkörper 18 einstückig ausgebildet. Dieser Ventilkörper
18 ist in dem Gehäusebohrungsteil 14 eingeschraubt
und liegt gegen die Stufe 15 der Gehäusebohrung 14,
16 an. Vom Ventilkörper 18 wird gehalten die Ventilplatte 4'', welche den ringförmigen Durchlaß 3 abdeckt.
Der Ringraum 12 ist verschlossen durch die Ventilplatte 10'' ,welche auf der anderen Seite einen zentrischen Durchlaßkanal 7'' des Ventilkörpers 18 abdeckt.
Gehalten wird diese Ventilplatte 10'' durch einen
zentrischen Gehäuseansatz 19 im Inneren der Gehäusebohrung 14,16.

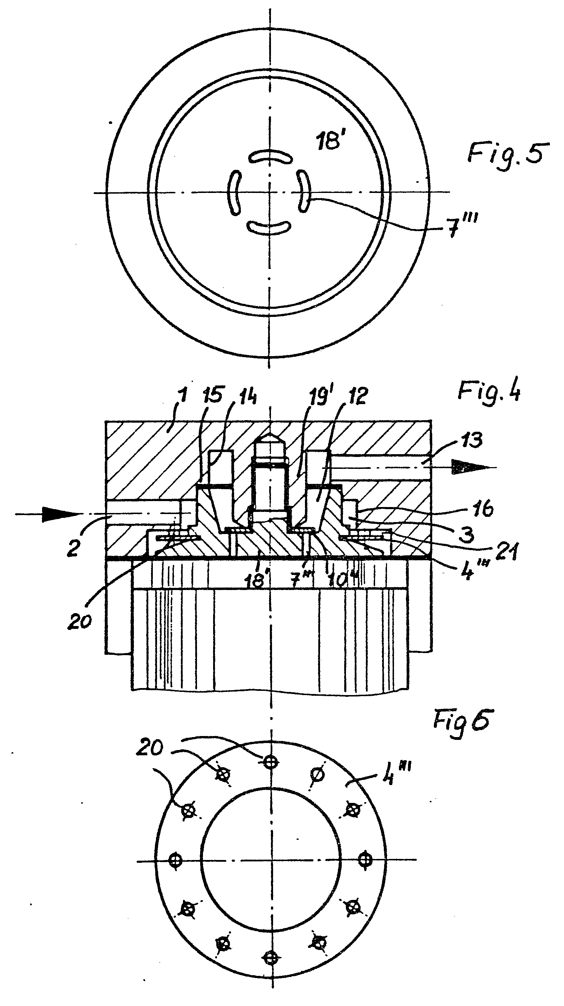

Bei der Ausführungsform nach Fig. 4 ist der einstückige
Ventilkörper 18' wiederum in den Kopf 1 eingeschraubt.
Einlaßseitig entspricht der Aufbau demjenigen nach Fig.
3. Auslaßseitig sind bogenförmige Durchlaßkanäle 7'''
vorgesehen, welche innenseitig durch das Plattenventil
10'' abgedeckt sind. Dieses Plattenventil 10'' wird gehalten zwischen dem Ventilkörper 18' und einem zentrischen
Ansatz 19' im Inneren der Gehäusebohrung 14,16.

Anhand der Fig. 4 und 6 wird verdeutlicht, wie trotz
guten Wirkungsgrades im Normalbetrieb ein Anlauf des
Kompressors gewährleistet ist, bei welchem das Plattenventil zum Einsatz kommt.

Der Grundgedanke besteht hierbei darin, beim Ansaugventil eine Undichtigkeit vorzusehen, die jedoch nur beim Anlauf, nicht jedoch beim Normalbetrieb vorhanden ist.

Die ansaugseitige Ventilplatte 4''' weist kleine geringfügige Erhöhungen 20 auf, die bedingen, daß die Ventilplatte 4''' im Ruhezustand nicht über den gesamten Querschnitt an der kopfseitigen Dichtfläche anliegt. Es entsteht vielmehr ein kapillarförmiger Dichtspalt 21. Während des Ansaugvorganges wirkt dieser kapillarförmige Dichtspalt 21 so, als ob eine Drossel mit geringer Drosselwirkung vorliegt. Im unteren Drehzahlbereich des Kompressors bedeutet dies, daß das Ansaugventil, nämlich die Ventilplatte 4''' nicht völlig schließt, so daß der Kompressor anzulaufen vermag, da beim Verdichtungshub über dem kapillarförmigen Dichtspalt 21 Luft zurück zum ringförmigen Durchlaßkanal 3 zurückzuströmen vermag. Ab einer bestimmten Kompressordrehzahl wird jedoch die Drosselwirkung völlig ausgeschaltet, da dann in Folge hoher Strömungsgeschwindigkeit ein Unterdruck derart auf die Ventilplatte 4''' wirkt, daß sie sich völlig an der kopfseitigen Dichtfläche anlegt.

Die Erhöhungen 20 können auch an der kopfseitigen Dichtfläche vorgesehen sein.

Die Vetnilplatte 4''' kann auch in umgekehrter Lage eingebaut werden, so daß die Erhöhungen 20 nicht zur Wirkung kommen.

Dipl.-Ing.

*Rolf Charrier*

Patentanwalt

Rehlingenstraße 8 · Postfach 260
D-8900 Augsburg 31
Telefon 08 21/3 60 15 + 3 60 16
Telex 53 3 275
Postscheckkonto München Nr. 1547 89-801

8228/07/Ch/Ha             -8-             Augsburg, den 3. Februar 1981

Ansprüche

1. Ringförmiges Plattenventil mit einer elastischen
   ringförmigen Ventilplatte, welche gegen einen äußeren
   Durchlaßkanal an einem Ventilkörper anliegt, und
   mit einer weiteren, dazu konzentrischen, im wesentlichen ringförmigen, vom Ventilkörper mittig gehaltenen elastische Ventilplatte, die gegen einen
   weiteren inneren Durchlaßkanal im Ventilkörper
   an der der einen Ventilplatte gegenüberliegenden
   Seite anliegt, dadurch g e k e n n z e i c h n e t,
   daß der Ventilkörper (9,11,18) drehsymmetrisch ausgebildet ist, er in eine gestufte Gehäusebohrung
   (14,18) eingesetzt ist, der eine Durchlaßkanal (3)
   als Ringkanal zwischen dem Ventilkörper (9,11,18) und
   dem einen Bohrungsteil (16) größeren Durchmessers gebildet wird, der Ventilkörper (9,11,18) gegen die
   Stufe (15) der gestuften Gehäusebohrung (14,16)
   anliegt und einen Ringraum (12) hinter der weiteren
   Ventilplatte (4) an der den weiteren Durchlaßkanal
   (7) abgewandten Seite bildet.

2. Plattenventil nach Anspruch 1, dadurch g e k e n n -
   z e i c h n e t, daß der Ventilkörper (9,11) zweigeteilt ausgebildet ist und der weitere Durchlaßkanal (7) ringförmig ausgebildet ist und zwischen
   einem inneren Ventilkörperteil (9) und einem
   äußeren Ventilkörperteil (11) gebildet wird.

3. Plattenventil nach Anspruch 2, dadurch g e k e n n -
   z e i c h n e t , daß der innere Ventilkörperteil
   (9) in die Gehäusebohrung (14,16) eingeschraubt ist.

4. Plattenventil nach Ansrpuch 2 oder 3, dadurch g e -
   k e n n z e i c h n e t, daß die eine Ventilplatte
   (4) vom äußeren Ventilkörperteil (11) gehalten wird.

5. Plattenventil nach Anspruch 4, dadurch g e k e n n -
   z e i c h n e t , daß eine im Bereich des weiteren
   Durchlaßkanals (7) Bohrungen aufweisende Scheibe
   (6) am inneren Ventilkörperteil (9) stirnseitig angeordnet ist, zwischen sich und dem äußeren Ventilkörperteil (11) die eine Ventilplatte (4) hält und
   diesen Ventilkörperteil (11) gegen die Stufe (15)
   presst.

6. Plattenventil nach einem der Ansprüche 1 bis 4, dadurch
   g e k e n n z e i c h n e t , daß die Ventilplatten (4',
   10') kegelstumpfartig auf die Ventilkörperteile (9',11')
   aufgespannt sind und mit Vorspannung den jeweiligen
   Durchlaßkanal (3,7) abdecken.

7. Plattenventil nach Anspruch 1, dadurch g e k e n n -
   z e i c h n e t , daß der einstückige Ventilkörper
   (18) in den Gehäusebohrungsteil (14) kleineren Durchmessers eingeschraubt ist, einen zentrischen weiteren
   Durchlaßkanal (7'') aufweist, gegen dessen Rand die
   weitere Ventilplatte (10'') anliegt, die sich innenseitig gegen einen zentrischen Ansatz (19) des
   Gehäuses (1) abstützt.

8. Plattenventil nach Anspruch 1, dadurch g e k e n n -
   z e i c h n e t , daß der einstückige Ventilkörper (18') in einen zentrischen Ansatz (19) des
   Gehäuses (1) eingeschraubt ist und zwischen diesem
   Ansatz (19) und dem Ventilkörper (18')die weitere
   Ventilplatte (10'') gehalten wird, die gegen
   bogenförmige weitere Durchlaßkanäle (7''') der Ventilplatte (18') anliegt.

9. Plattenventil nach einem der Ansprüche 1 bis 8,
   dadurch g e k e n n z e i c h n e t, daß mindestens
   die eine elastische Ventilplatte (4) kleine Erhöhungen (20) im Bereich ihrer Dichtfläche aufweist, die bei geringen Strömungsgeschwindigkeiten
   einen Drosselspalt (21)zum einem Durchlaßkanal
   (3) bewirken, der bei höheren Strömungsgeschwindigkeiten geschlossen ist.

Fig. 1

Fig. 2

Fig. 3

Fig.5

Fig.4

Fig 6

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | F 16 K 15/14 |
| | DE - B2 - 1 809 954 (WOMA-APPARATEBAU)<br>* Spalte 4, Zeilen 17 bis 31; Fig. 1 *<br>-- | 1,2 | |
| | US - A - 3 865 345 (KROPIWNICKI)<br>* Fig. 1 *<br>& DE - A - 2 426 378<br>-- | 1 | |
| | CH - A5 - 594 135 (SIEGLER)<br>* Fig. 3, 4 *<br>& DE - C - 2 635 166<br>-- | 1 | RECHERCHIERTE SACHGEBIETE (Int. Cl.³) |
| | US - A - 3 633 613 (JULOW)<br>* Fig. 2, 3 *<br>-- | 1 | F 04 B 21/00<br>F 16 K 15/00 |
| | US - A - 1 719 572 (STOLL)<br>* Fig. 1 *<br>-- | 1 | |
| A | DD - A - 133 837 (VEB MASCHINEN- UND APPARATEBAU SCHKEUDITZ)<br>-- | | |
| A | US - A - 3 643 687 (HUDSON, JR.)<br>-- | | |
| A | US - A - 2 015 915 (ADSIT)<br>-- | | |
| A | US - A - 1 476 794 (BERRY)<br>-- | | |
| A | US - A - 1 334 507 (SHARTLE)<br>-- | | |
| D | GB - A - 1 531 122 (TRANE)<br>---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 19-06-1981 | SCHLABBACH |

EPA form 1503.1 06.78